# EUROPEAN PATENT APPLICATION

(11) **EP 2 426 770 A1**
(43) Date of publication of application: **07.03.2012**
(21) Application number: 10769434.1
(22) Date of filing: 05.03.2010
(51) Int. Cl.: H01M 8/06, C01B 3/38, H01M 8/04, H01M 8/10

(54) **REFORMER FOR FUEL CELL**

(30) Priority: 28.04.2009 JP 2009110059
(71) Applicant: Eneos Celltech Co., Ltd., Gunma 370-0596 (JP)
(72) Inventor: NISHIMURA, Yoshinobu, Ora-gun Gunma 370-0596 (JP); KADOWAKI, Masataka, Ora-gun Gunma 370-0596 (JP); FUJU, Akira, Ora-gun Gunma 370-0596 (JP); KAJITA, Takuya, Ora-gun Gunma 370-0596 (JP); HARA, Yoshitaka, Ora-gun Gunma 370-0596 (JP)
(74) Representative: Algemeen Octrooi- en Merkenbureau
(86) International application number: PCT/JP2010/001570
(87) International publication number: WO 2010/125732

(57) **Abstract**

A reforming apparatus for a fuel cell (10) includes a reformer (30) for generating the reformed gas containing hydrogen gas as the main component by reacting the raw fuel, a CO converter (60) for reducing the concentration of CO in the reformed gas generated by the reformer (30), through the shift reaction, a CO remover (70) for further reducing the concentration of CO in the reformed gas, whose concentration of CO has been reduced by the CO converter, by use of a selective oxidation catalyst, and a structure capable of supplying air to a gas flow passage by way of an air supplying flow passage (102) connected to the gas flow passage disposed upstream of the CO remover (70). After the supply of the raw fuel to the reformer (30) has stopped, air is introduced into the gas flow passage disposed upstream of the CO remover (70).

## Description

### TECHNICAL FIELD

The present invention relates to a reforming apparatus for a fuel cell which generates a reformed gas used for the fuel cell by reforming raw fuel.

### BACKGROUND TECHNOLOGY

Recently much attention has been focused on fuel cells that feature not only high energy conversion efficiency but also no hazardous substance produced by the electricity-generating reaction. Known as one of such fuel cells is a polymer electrolyte fuel cell (PEFC).

A polymer electrolyte fuel cell, which has a basic structure of a solid polymer electrolyte membrane disposed between a fuel electrode and an air electrode, generates power through an electrochemical reaction as described below by supplying a fuel gas containing hydrogen to the fuel electrode and an oxidant gas containing oxygen to the air electrode.

Fuel electrode : H₂→2H⁺+2e⁻ (1)

Air electrode : (1/2)O₂+2H⁺+2e⁻→7H₂O (2)

For practical purposes, a method is employed where hydrogen used as a fuel for the polymer electrolyte fuel cell is obtained in a manner that a hydrocarbon-based gas, such as natural gas or naphtha relatively easily procurable at a relatively low cost, or a raw fuel gas of an alcohol type, such as methanol, and steam are mixed together and then reformed by a reformer. The hydrogen gas obtained by the reforming is supplied to a fuel electrode of the fuel cell and used to generate electricity.

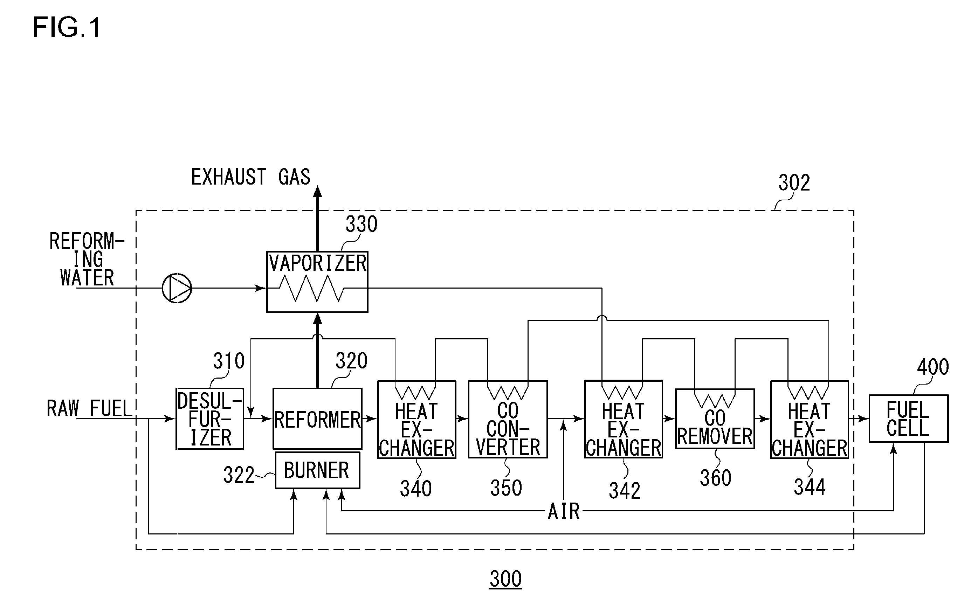

FIG. 1 is a schematic diagram showing a structure of a conventional fuel cell system. A fuel cell system 300 has a reforming apparatus 302, for a fuel cell, which produces a hydrogen-rich reformed gas from a raw fuel and a fuel cell 400. In the conventional practice, a raw fuel, which is a hydrocarbon-based gas such as natural gas or LPG, is first supplied to a desulfurizer 310, in the fuel cell system, where a sulfur component is removed from the raw fuel.

The raw fuel from which the sulfur component has been removed is supplied to a reformer 320. The reformer 320 generates the reformed gas in such a manner that the raw fuel is steam-reformed by passing the raw fuel through a catalyst heated by a burner 322.

At the start-up of the reformer 320, the reformer 320 is heated and therefore part of the raw fuel is supplied to the burner 322. As the fuel cell 400 reaches a stage of stable operation, the supply of raw fuel to the burner 322 stops and the cell offgas discharged from the fuel cell 400 is supplied to the burner 322, which in turn raises the temperature of the reformer 320. The exhaust gas produced by the combustion at the burner 322 is subjected to a heat exchanged with the reforming water at a vaporizer 330 before the exhaust gas is discharged outside the fuel cell system 300. Also, air is supplied to the burner 322 and used for the combustion at the burner 322.

The reformed gas generated by the reformer 320 undergoes a heat exchange with reforming water (steam), which is the reforming water before it is added to the raw fuel, at a heat exchanger 340. Then, the reformed gas is supplied to a CO converter 350. The CO converter 350 converts carbon monoxide into hydrogen through a shift reaction. Thereby, the concentration of hydrogen is raised and the concentration of CO is reduced.

The reformed gas whose CO concentration has been reduced at the CO converter 350 is subjected to a heat exchange with steam, vaporized by the vaporizer 330, at a heat exchanger 342 before the reformed gas is supplied to a CO remover 360. The CO remover 360 further reduces the concentration of CO by the CO oxidation reaction using a selective oxidation catalyst. It is to be noted here that air required for the CO oxidation reaction is supplied to the reformed gas whose CO concentration has been reduced by the CO converter 350.

The reformed gas whose concentration of CO has been further reduced by the CO remover 360 undergoes a heat exchange with steam at the heat exchanger 344 and is then supplied to the fuel electrode of the fuel cell 400. Air is supplied as an oxidant to the air electrode, and electric power is generated through an electrochemical reaction between hydrogen and oxygen.

Steam required for a reforming reaction in the reformer 320 is generated from the reforming water supplied outside the fuel cell system 300. More specifically, the reforming water, which is in the state of liquid, supplied from outside is vaporized by subjecting the reforming water to a heat exchange with an exhaust gas from the burner 322 so as to become steam. The steam generated by the vaporizer 330 undergoes a heat exchange with the reformed gas at the heat exchanger 342, the CO remover 360, and the heat exchanger 344 in this order, then further undergoes a heat exchange with the reformed gas at the CO converter 350 and the heat exchanger 340 in this order, and is mixed into the desulfurized raw fuel.

### [Related Art Documents]

### [Patent Documents]

[Patent Document 1] Japanese Unexamined Patent Application Publication No. 2008-247735.
[Patent Document 2] Japanese Unexamined Patent Application Publication No. 2003-12302.
[Patent Document 3] Japanese Unexamined Patent Application Publication No. 2007-95549.
[Patent Document 4] Japanese Unexamined Patent Application Publication No. 2007-230837.

### DISCLOSURE OF THE INVENTION

### PROBLEMS TO BE SOLVED BY THE INVENTION

In the conventional practice, the following methods are available, for example, as a method employed to suppress the degradation of a selective catalyst provided in the reforming apparatus for a fuel cell when the reforming apparatus for a fuel cell stops. In one such method, the valves at an inlet side (raw fuel supply port) of the reforming apparatus for a fuel cell and at an outlet side thereof are closed. In another such method, the raw fuel is introduced from an inlet side of the reforming apparatus for a fuel cell and then the inside of a gas flow passage in the reforming apparatus for a fuel cell is purged. In still another such method, air is introduced from an outlet side of the reforming apparatus for a fuel cell and then the inside of a gas flow passage in the reforming apparatus for a fuel cell is purged.

In the method where the valves at the inlet side of the reforming apparatus for a fuel cell and at the outlet side thereof are closed, the pressure inside the reforming apparatus for a fuel cell drops on account of water condensation caused by a temperature drop therein. As a result, electromagnetic values that hermetically seal the gas flow passage in the reforming apparatus for a fuel cell is susceptible to a damage. [0013] has an on-off value of normal open type.

In the method where the raw fuel is introduced from the inlet side of the reforming apparatus for a fuel cell and then the inside of a gas flow passage in the reforming apparatus for a fuel cell is purged and where LPG is used as the raw fuel, LPG that remains in a reaction container such as a reformer may be heated to a decomposition temperature or above at the start-up. Thus the caulking occurs on a reforming catalyst and a problem arises where the catalyst performance drops.

In the method where air is introduced from the outlet side of the reforming apparatus for a fuel cell and then the inside of a gas flow passage in the reforming apparatus for a fuel cell is purged, the inflow of air may possibly cause the oxidation of a selective oxidation catalyst in the CO remover. Thus, a sacrificial oxidant and the like needs to be provided at a point downstream of the selective oxidation catalyst to suppress the oxidation of the selective oxidation catalyst and therefore a problem of increased cost arises. If the sacrificial oxidant is provided at a point downstream of the selective oxidation catalyst, air will stay on in a gas flow passage leading from a downstream side of the sacrificial oxidant to the outlet side of the reforming apparatus for a fuel cell where air is introduced. As a result, at the start-up of the reforming apparatus for a fuel cell, the air that stays on in the gas flow passage flows into the fuel cell and therefore the oxidation of a catalyst metal used for electrodes of the fuel cell proceeds and the durability of the fuel cell deteriorates.

The present invention has been made in view of the foregoing problems, and a purpose thereof is to provide a technology for suppressing the degradation of a selective oxidation catalyst with a simple structure during the stoppage of a reforming apparatus for a fuel cell, without causing a drop in the durability of the fuel cell.

### MEANS FOR SOLVING THE PROBLEMS

One embodiment of the present invention relates to a reforming apparatus for a fuel cell. The reforming apparatus for a fuel cell includes: a reformer configured to generate a reformed gas containing hydrogen gas as a main component by reacting raw fuel; a CO converter configured to reduce the concentration of CO in the reformed gas generated by the reformer, through a shift reaction; a CO remover configured to further reduce the concentration of CO in the reformed gas, whose concentration of CO has been reduced by the CO converter, by use of a selective oxidation catalyst; and an air supply unit configured to supply air to a gas flow passage by way of an air supplying flow passage connected to the gas flow passage disposed upstream of the CO remover, wherein after the supply of the raw fuel to the reformer has stopped, air is introduced into the gas flow passage disposed upstream of the CO remover.

In general, the temperature at the reformer is higher than that at the CO remover, and the volume of the reformer is larger than the volume of the CO remover. Accordingly, at the time of stop of the reforming apparatus for a fuel, the reformer and the CO converter are subject to effects of water condensation and temperature drop. Hence, the pressure of the inside of the reformer and the CO convert is more likely to be reduced than the CO remover. This makes it easy for the air introduced into a gas flow passage upstream of the CO remover to flow toward the CO converter. Oxygen in the air having flowed into the CO converter is removed by the oxidation of a shift catalyst. The air from which oxygen has been removed flows naturally into the reformer 30. This can prevent the inside of the reforming apparatus for a fuel cell from becoming negative pressure, without purging the gas flow passage in the reforming apparatus for a fuel cell. At the same time, the oxidation of the selective oxidation catalyst used in the CO remover can be suppressed without installing a sacrificial oxidant at a point downstream of the CO remover. Since air successively flows into the CO converter due to the reduced pressure in the gas flow passage when the operation of the reforming apparatus for a fuel cell stops, the temperature of the shift catalyst used in the CO converter drops immediately. Thus, the sintering hardly occurs even if the oxidation of the shift catalyst develops and therefore the durability of the shift catalyst will not drop substantially.

In the above-described reforming apparatus for a fuel cell, the volume of the gas flow passage that covers starting from the CO converter to a position where the air supplying flow passage is connected may be smaller than the volume of the gas flow passage that covers starting from the position, where the air supplying flow passage is connected, to the CO remover. The volume of the gas flow passage that covers starting from the CO converter to the position where the air supply flow passage is connected may be smaller than or equal to 1/6 of the volume of the gas flow passage that covers starting from the position, where the air supplying flow passage is connected, to the CO remover.

In the above-described reforming apparatus for a fuel cell, a connection point of the air supply flow passage connected to the gas flow passage may simultaneously serve as a path through which to feed air used for a selective oxidation in the CO remover.

Also, a diffuser configured to diffuse the flow of gas may be provided in the gas flow passage disposed downstream of the position where the air supplying flow passage is connected.

Also, the air supply unit may have an on-off valve of normal open type.

It is to be noted that any arbitrary combinations or rearrangement, as appropriate, of the aforementioned constituting elements and so forth are all effective as and encompassed by the embodiments of the present invention.

### EFFECT OF THE INVENTION

The present invention suppresses the degradation of a selective oxidation catalyst with a simple structure during the stoppage of a reforming apparatus for a fuel cell, without causing a drop in the durability of the fuel cell.

### BRIEF DESCRIPTION OF THE DRAWINGS

FIG. 1 is a schematic diagram showing a structure of a conventional fuel cell system.
FIG. 2 is a schematic diagram showing a structure of a fuel cell system including a reforming apparatus for a fuel cell according to an embodiment.
FIG. 3 illustrates a specific example of a diffuser.

### BEST MODE FOR CARRYING OUT THE INVENTION

Hereinbelow, the embodiments of the present invention will be described with reference to the accompanying drawings. Note that the identical components are given the identical reference numerals in all accompanying Figures and the repeated description thereof will be omitted as appropriate.

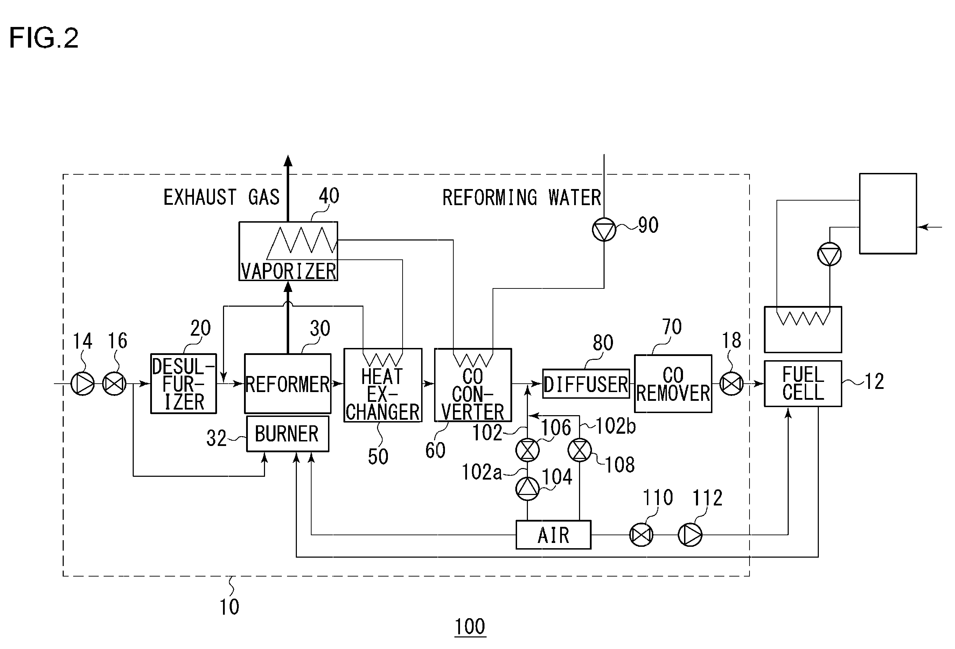

FIG. 2 is a schematic diagram showing a structure of a fuel cell system 100 including a reforming apparatus 10 for a fuel cell according to an embodiment.

The reforming apparatus 10 for a fuel cell includes a desulfurizer 20, a reformer 30, a burner 32, a vaporizer 40, a heat exchanger 50, a CO converter 60, and a CO remover 70.

Raw fuel (hydrocarbon-based gas such as natural gas or LPG) is first supplied to the desulfurizer 20 where a sulfur component is removed. Thereby, the sulfur component acts as a catalyst poison on the catalyst contained in the reformer 30 and the fuel cell 12, which will suppress a drop in the reforming performance of the reforming apparatus for a fuel cell and the power generating performance of the fuel cell 200 by the sulfur poisoning. The desulfurizer 20 desulfurizes the raw fuel through a reaction of the raw fuel, containing the sulfur component at the presence of the catalyst, to hydrogen. That is, the desulfurizer 20 desulfurizes the raw fuel by employing a so-called hydrogenation desulfurization system. The feed rate of raw fuel is controlled, as appropriate, by regulating the output of a raw fuel supply pump 14. Also, an on-off valve is provided downstream of the raw fuel supply pump 14, so that the flow of raw fuel can be blocked off by closing the on-off valve 16.

The raw fuel whose sulfur component has been removed is supplied to the reformer 30. The reformer 30 is provided with a catalyst layer comprised of a reforming catalyst with a carrier, such as alumina, supporting a metallic catalyst such as ruthenium (Ru). The reformer 30 steam-reforms the raw fuel by the reforming catalyst heated by the burner 32, thereby producing a reformed gas containing about 80% hydrogen (fuel). Note that the steam-reforming reaction is performed in a range of about 650°C to 700°C, for instance.

At the start-up of the reformer 30, the temperature of the reformer 30 is raised and therefore part of the raw fuel is supplied to the burner 32. As the fuel cell 12 reaches the stage of stable operation, the supply of raw fuel to the burner 32 stops and the cell offgas discharged from the fuel cell 12 is supplied to the burner 32, which in turn raises the temperature of the reformer. The exhaust gas produced by the combustion at the burner 32 is subjected to a heat exchanged with the reforming water at the vaporizer 40 before the exhaust gas is discharged outside the fuel cell system 100. Also, air is supplied to the burner 32 and used for the combustion at the burner 32.

When passing through the heat exchanger 50, the reformed gas generated by the reformer 30 is cooled by heat exchange with steam which has passed through the vaporizer 40 and then the reformed gas is supplied to the CO converter 60. The CO converter 60 is provided with a catalyst layer comprised of a Cu-Zn-based catalyst composed of pellets of copper oxide or zinc oxide, for instance, and converts carbon monoxide into hydrogen through a shift reaction. As a result, the concentration of hydrogen is raised and the concentration of CO is reduced to 0.5% or below. Note that a selective oxidation reaction takes place within a range of about 70°C to about 180°C, for instance.

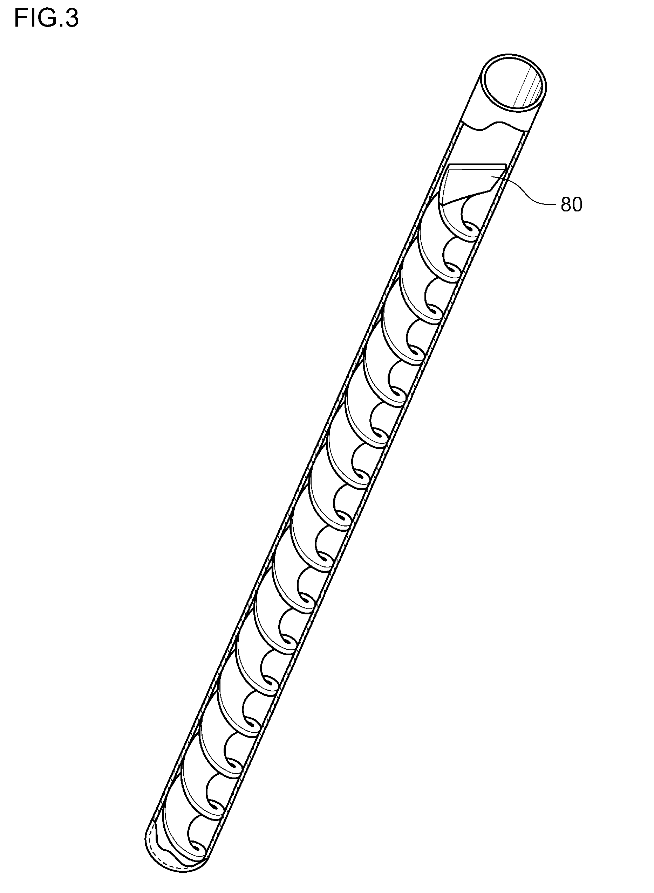

The reformed gas whose carbon monoxide has been reduced by the CO converter 60 passes through a diffuser 80 and is then supplied to the CO remover 70. FIG. 3 illustrates a specific example of the diffuser80. The diffuser 80 is formed by twisting a plate-like member and is a twisted plate provided within a gas flow passage (piping) that starts from the CO converter 60 and leads to the CO remover 70. When passing through the piping where the diffuser 80 is provided, gas hits the gas diffuser 80 to enhance the gas diffusion. Accordingly, the passing of reformed gas and air for use in the selective oxidation through the piping where the diffuser 80 is provided can enhance the mixing property of reformed gas and air for use in the selective oxidation and the gas dispersibility. As a result, the entire selective oxidation catalyst used in the CO remover 70 can efficiently contribute to the removal of CO, so that the durability of the CO remover 70 can be improved. Expressing differently, the downsizing of the CO remover 70 can be achieved while the same operating life of the CO remover 70 is maintained.

Referring back to the description of FIG. 2, the CO remover 70 is provided with a catalyst layer comprised of a CO selective oxidation catalyst with a carrier, such as alumina, supporting Ru. The concentration of CO in the reformed gas is reduced to about 10 ppm by a CO selective oxidation reaction, using the CO selective oxidation catalyst, at the CO remover 70. It is to be noted here that air required for the CO oxidation reaction is supplied to the reformed gas whose concentration of CO has been reduced by the CO converter 60. More specifically, an air supplying flow passage 102 is connected to a gas flow passage disposed upstream of the diffuser 80. The air supplying flow passage 102 is bifurcated midway into two flow passages, namely an air supplying flow passage 102a and an air supplying flow passage 102b. During an operation of the reforming apparatus 10 for a fuel cell, air is supplied to the gas flow passage disposed upstream of the diffuser 80 by way of the air supplying flow passage 102a and is used for the CO oxidation reaction in the CO remover 70. The air supplying flow passage 102a is provided with an air supplying pump 104 and an on-off valve 106, so that the feed rate of air can be regulated by controlling the output of the air supplying pump 104. Also, the inflow of air to the gas flow passage disposed upstream of the diffuser 80 is blocked by closing the on-off valve 106.

Also, the air supplying flow passage 102b is provided with an on-off valve 108. Specifically, the on-off valve 108 is an electromagnetic valve of normal open type. That is, while the reforming apparatus 10 for a fuel cell is in operation, the on-off valve 108 is closed; as the operation of the reforming apparatus 10 for a fuel cell stops, the on-off valve 108 is opened and therefore air is supplied to the gas flow passage disposed upstream of the diffuser 80 by way of the air supplying flow passage 102b.

It is desirable that the volume of the gas flow passage that covers starting from the outlet of the CO converter 60 to a position where the air supplying flow passage 102 is connected is smaller than the volume of the gas flow passage that covers starting from the position, where the air supplying flow passage 102 is connected, to the inlet of the CO remover 70. More preferably, the volume of the gas flow passage that covers starting from the CO converter 60 to the position where the air supplying flow passage 102 is smaller than or equal to 1/6 of the volume of the gas flow passage that covers starting from the position, where the air supplying flow passage 102 is connected, to the CO remover 70. Thereby, the inflow of air to the CO remover 70 is suppressed when the operation of the reforming apparatus 10 for a fuel cell stops and air is supplied to the gas flow passage disposed upstream of the diffuser 80 by way of the air supplying flow passage 102b. As a result, the performance degradation caused by the selective oxidation catalyst used in the CO remover 70 is suppressed.

"The volume of the gas flow passage that covers starting from the CO converter 60 to the position where the air supplying flow passage 102 is connected is smaller than the volume of the gas flow passage that covers starting from the position, where the air supplying flow passage 102 is connected, to the CO remover 70" means as follows. This means that if the diameter of the gas flow passage is constant, the gas flow passage leading from the position, where the air supplying flow passage 102, to the CO remover 70 will be longer in length than the gas flow passage leading from the CO converter 60 to the position where the air supplying flow passage 102 is connected. By employing this structure, when the reformed gas and the air for use in the selective oxidation pass from the position, where the air supplying flow passage 102 is connected, to the CO remover 70, the mixing property of the reformed gas and the air for use in the selective oxidation can be improved.

Suppose that the volume of the gas flow passage leading from the CO converter 60 to the position where the air supplying flow passage 102 is connected is larger than necessary. Then, if air staying on in said position flows into the CO remover 70, the oxidation of the selective oxidation catalyst used in the CO remover 70 will more likely to proceed. For this reason, the volume of the gas flow passage leading from the CO converter 60 to the position where the air supplying flow passage 102 is connected is preferably 10 cm³ or below.

In the light of the above, the volume of the gas flow passage leading from the CO converter 60 to the position where the air supplying flow passage 102 is typically 6 cm³. Also, the volume of the gas flow passage leading from the position, where the air supplying flow passage 102 is connected, to the CO remover 70 is typically 43.5 cm³.

It is to be noted here that the smaller the diameter of the gas flow passage provided between the CO converter 60 and the CO remover 70, the smaller the volume of the gas flow passage can be and the greater the mixing property of the reformed gas and the air for use in the selective oxidation improves, which is advantageous all the more. However, if the diameter of the gas passage flow is excessively small, the pressure loss in the gas flow passage will be large. Accordingly, the diameter of the gas flow passage provided between the CO converter 60 and the CO remover 70 is preferably in a range of 6 to 12 mm, typically 3/8 inch.

The reformed gas whose CO concentration has been further reduced by the CO remover 70 is supplied to the fuel electrode of the fuel cell 12. An on-off valve 18 is disposed downstream of the CO remover 70, and the inflow of gas from the CO remover 70 to the fuel cell 12 is blocked by closing the on-off valve 18. The fuel cell 12 is, for example, a polymer electrolyte fuel cell (PEFC). This fuel cell 12 has a laminated body comprising a stack of a plurality of membrane electrode assemblies (single cells) each provided with a solid polymer electrolyte membrane between the fuel electrode and the air electrode. Air is supplied as an oxidant to the air electrode of the fuel cell 12, and electric power is generated through an electrochemical reaction between hydrogen and oxygen. The feed rate of air to the air electrode of the fuel cell 12 is regulated by the output of an air supplying pump 112. Also, an on-off valve 110 is disposed upstream of the air supplying pump 112, and the inflow of air to the air electrode of the fuel cell 12 is blocked by closing the on-off valve 110.

Steam required for the reforming reaction in the reformer 30 is generated from the reforming water supplied outside the fuel cell system 100. The reforming water is produced by processing water from the waterworks by a water treatment unit (not shown) provided with a reverse osmosis membrane, ion-exchange resin, and the like. The water treatment unit not only lowers the electric conductivity of the water from the waterworks but also reduces organic matter having mixed therein. The feed rate of reforming water is adjusted as appropriate by adjusting the output of a reforming water supply pump 90.

The temperature of the reforming water, which is in the state of liquid, supplied from outside, is raised by subjecting the reforming water to a heat exchange with the reformed gas at the CO converter 60, and then this reformed water is supplied to the vaporizer 40. When subjected to the heat exchange with the reformed gas at the CO converter 60, the reforming water starts to vaporize. Further, the reforming water is subjected to a heat exchange with an exhaust gas from the burner 32 at the vaporizer 40 so as to complete the vaporization. When passing through the heat exchanger 50, the steam vaporized at the vaporizer 40 is heated and then added to the raw fuel at a point downstream of the desulfurizer 20.

### (Operation at start-up)

At the start-up of the reforming apparatus 10 for a fuel cell, the raw fuel supply pump 14 is driven and, at the same time, the on-off valve 16 is opened and the raw fuel is supplied to the desulfurizer 20. The raw fuel is desulfurized and then, together with steam, is supplied to the reformer 30 where a reformed gas containing hydrogen is generated through a reforming reaction. The reformed gas generated at the reformer 30 passes through the heat exchanger 50 and then is supplied to the CO converter 60. At this time, the concentration of CO in the reformed gas is reduced by a shift reaction. The outlet gas of a shift reacting unit is supplied to the CO remover 70. Opening the on-off value 106 and driving the air supplying pump 104 allows the air for use in the selective oxidation reaction to be supplied to a gas flow passage disposed upstream of the diffuser 80. At this time, the on-off valve 108 is closed. Also, the on-off valve 18 is opened and the reformed gas containing hydrogen is supplied to the fuel cell 12. After the supply of the reformed gas to the fuel cell 12 starts, the on-off valve 110 is opened. At the same time, air is supplied to the fuel cell 12 by driving the air supplying pump 112.

### (Operation at the time of stop)

A description is now given of a procedure through which the reforming apparatus 10 for a fuel cell is to be stopped. Upon stopping of the reforming apparatus 10 for a fuel cell, the drive of the raw fuel supply pump 14 is first stopped and, at the same time, the supply of the raw fuel to the reforming apparatus 10 for a fuel cell is stopped. In parallel with this, the drive of the reforming water supply pump 90 is stopped and the supply of the reforming water to the reforming apparatus 10 for a fuel cell is stopped. Also, the supply of fuel and air for fuel to the burner 32 is stopped

Further, the supply of the air for use in the selective oxidation reaction is stopped by closing the on-off valve 106, and the supply of air to the fuel cell 12 is stopped by closing the on-off valve 110. Also, the supply of the reformed gas to the fuel cell 12 is stopped by closing the on-off valve 18. When the supply of power to the on-off valve 108 stops, the on-off valve 108 is in the open state with the result that the air supplying flow passages 102 and 102b are in open air. Thus, the temperature of the reforming apparatus 10 for a fuel cell drops and then air flows into a gas flow passage between the CO converter 60 and the CO remover 70 from the air supplying flow passage 102.

As described above, the volume of the gas flow passage leading from the CO converter 60 to the position where the air supplying flow passage 102 is connected is smaller than the volume of the gas flow passage leading from the position, where the air supplying flow passage 102 is connected, to the CO remover 70. This makes it easy for the air having flowed into the gas flow passage from the air supplying flow passage 102 to flow toward the CO converter 60, and therefore oxygen in the air is removed by the oxidation of a shift catalyst at the CO converter 60. The air from which oxygen has been removed flows naturally into the reformer 30. This can prevent the inside of the reforming apparatus 10 for a fuel cell from becoming negative pressure, without purging the gas flow passage in the reforming apparatus 10 for a fuel cell. At the same time, the oxidation of the selective oxidation catalyst used in the CO remover 70 can be suppressed without installing a sacrificial oxidant at a point downstream of the CO remover 70.

The present invention is not limited to the above-described embodiments only, and it is understood by those skilled in the art that various modifications such as changes in design may be made based on their knowledge and the embodiments added with such modifications are also within the scope of the present invention.

### DESCRIPTION OF THE REFERENCE NUMERALS

- 10: Reforming apparatus for a fuel cell
- 12: Fuel cell
- 20: Desulfurizer
- 30: Reformer
- 32: Burner
- 40: Vaporizer
- 50: Heat exchanger
- 60: CO converter
- 70: CO remover
- 80: Diffuser
- 100: Fuel cell system

### INDUSTRIAL APPLICABILITY

The present invention is employed for a reforming apparatus for a fuel cell which generates a reformed gas containing hydrogen gas as the main component by reforming raw fuel.

## Claims

1. A reforming apparatus (10) for a fuel cell (12), comprising:
a reformer (30) configured to generate a reformed gas containing hydrogen gas as a main component by reacting raw fuel;
a CO converter (60) configured to reduce the concentration of CO in the reformed gas generated by the reformer, through a shift reaction;
a CO remover (70) configured to further reduce the concentration of CO in the reformed gas, whose concentration of CO has been reduced by the CO converter (60), by use of a selective oxidation catalyst; and\
an air supply unit configured to supply air to a gas flow passage by way of an air supplying flow passage (102) connected to the gas flow passage disposed upstream of the CO remover (70),
wherein after the supply of the raw fuel to the reformer (30) has stopped, air is introduced into the gas flow passage disposed upstream of the CO remover (70).

2. A reforming apparatus (10) for a fuel cell (12), according to claim 1, wherein a volume of the gas flow passage that covers starting from the CO converter (60) to a position where the air supplying flow passage is connected is smaller than a volume of the gas flow passage that covers starting from the position, where the air supplying flow passage is connected, to the CO remover (70).

3. A reforming apparatus (10) for a fuel cell (12), according to claim 2, wherein the volume of the gas flow passage that covers starting from the CO converter (60) to the position where the air supply flow passage is connected is smaller than or equal to 1/6 of the volume of the gas flow passage that covers starting from the position, where the air supplying flow passage is connected, to the CO remover (70).

4. A reforming apparatus (10) for a fuel cell (12), according to any one of claim 1 to claim 3, wherein a connection point of the air supply flow passage (102) connected to the gas flow passage simultaneously serves as a path through which to feed air used for a selective oxidation in the CO remover (70).

5. A reforming apparatus (10) for a fuel cell (12), according to claim 4, wherein a diffuser configured to diffuse the flow of gas is provided in the gas flow passage disposed downstream of the position where the air supplying flow passage (102) is connected.

6. A reforming apparatus (10) for a fuel cell (12), according to any one of claim 1 to claim 5, wherein the air supply unit (102) has an on-off valve of normal open type.
